# EUROPEAN PATENT APPLICATION

(11) **EP 4 624 893 A1**
(43) Date of publication of application: **01.10.2025**
(21) Application number: 24166058.8
(22) Date of filing: 25.03.2024
(51) Int. Cl.: G01N 1/10, G01N 1/12

(54) **MARINE WATER SAMPLING SYSTEM**

(71) Applicant: Seabot SARL, 2036 Tunis (TN)
(72) Inventor: KALBOUSSI, Rami, Mannheim (DE)
(74) Representative: Cullinane, Marietta Bettina

(57) **Abstract**

A subsurface water sampling system is disclosed, which comprises an onboard control unit with a power supply interface and an input/output (I/O) interface. The control unit communicates with an actuator driver for operational control. The system also may include a feedback system and a hazard detection system. The system further includes at least one sample collection unit featuring an electronically actuated valve controllable via external input, a fill gauge for monitoring water levels, and a hermetically sealed sampling cup. Each sample collection unit may incorporate a physical or chemical sensor, a biosensor, or an environmental DNA (E-DNA) filter.

## Description

### TECHNICAL FIELD

The present invention relates to subsurface marine water sampling systems, particularly underwater sampling systems to be used with remotely operated underwater vehicles.

### BACKGROUND

Currently, the exploitation of the underwater world is a vital to understanding aquatic science and safely inspect submerged sites and structures. This has recognized a need for technological and industrial development for underwater exploration. This mission aims to preserve the state of integrity of the underwater structures, to optimize costs, and to ensure the safety of inspectors and the environment.

Previously, methods of marine water sampling are quite primitives and must be carried out by experienced divers and require advanced special tools. Today, utilizing underwater vehicles capable of accomplishing the task guarantee safety for divers and reduce mission costs.

To keep pace with these development, tests and processes need to be automated in order to deliver satisfactory results. This calls for the use of a number of innovative tools, such as remotely operated vehicles and automatic inspection or monitoring systems in the form of modules mountable on these vehicles.

The first chapter will be dedicated to the presentation of the host company and the explanation of the general framework of the project. In what follows, there will be the study of the existing ones by citing the solutions of taking samples in the current state, Then, we will explain the solution.

An unmanned underwater vehicle is internationally known as a ROV (Remotely Operated Vehicle). The ROV can be connected by a physical to an operator who may be onboard of a surface vessel. The role of the cable is to supply the ROV with electrical power and transfer instruction and data between the operator and the vehicle.

ROVs present complexity in terms of their objectives due to their diversity. Indeed, applications are generally dedicated to several areas such as searches scientific research, natural resource extraction, etc. Best-known applications are collection of biological or geological specimens. The majority of ROVs feature a manipulator arm controlled by the user onboard a vessel. High-power ROVs can carry loads such as temperature, depth and conductivity (CTD) sensors, side scan and multibeam sonars, Doppler (ADCP), profilers of acoustic currents, as well as more specialized payloads for the study of interstitial waters in which plankton samplers and microelectrodes can be used.

ROVs are usually controlled from the surface vessel at a short distance orthogonal to the ship. Deepening into water requires the surface vessel uses dynamic positioning while remaining in position. Cable management being a difficult task, ROVs are more suited to the exploitation of small areas (100 square meters), rather than to carry out large-scale studies. The geo-positioning of the ROV in relation to the position of the surface ship is typically ensured by acoustic means.

The very first application of the ROV was developed by the defense and construction industries, oil. The maturation of technology and the reduction in the price of robots have led to their adoption as a useful means of research for researchers.

ROVs have diverse applications and can be richly equipped. This is how the majority of remote-controlled robot manufacturers provide a basic structure on which changes can be made. This basic structure is called by "framework" or "template" of the ROV.

An underwater ROV is well equipped with modem technology, and among many subsystems, can comprising a lighting system, to illuminate the environment, and a camera, to record the underwater panoramic images and contribute to the formation of geology and learning about underwater life.

With the rapid developments in underwater technology, recent techniques are applied to remote-controlled robots in order to amplify their performance. Machines additional can integrate a sampler, a static camera, or even an arm manipulator.

Underwater robots were mainly invented to accomplish a mission of regular inspection of oil or drinking water pipelines (external and internal) and to conduct structural testing methods on selected platforms, from various locations offshores. As the capabilities of ROVs improve, the oil and gas industry, particularly the offshore gas industry has started to mandate the use of ROVs for drilling and services underwater inspection and construction to enable the development of projects oilfields in deep waters where accessibility is very limited for divers due to unfavorable risks.

Additionally, a remotely controlled underwater robot can integrate advanced instruments to measure and assess light penetration and water clarity, current temperature, and even conducts military operations. An ROV also makes it possible to predict threats hidden under the waves, without risking the safety of divers.

In addition, other instruments are currently used in ROVs in research scientific research and exploration in order to better understand the underwater environment such as chemical analyzers, which are used to study the specific composition of water at different locations and at different depths. Scanning sonars can be used to evaluate fish masses in different depths.

These ROVs are even used for exploring shipwreck sites and historical ruins in the ocean waters. ROVs meet the needs of several scientific expeditions and several educational programs in aquariums.

Underwater vehicles can be categorized as manned or unmanned vehicles. Unmanned vehicles are further be categorized as autonomous underwater vehicle (AUV), which typically are unmanned, untethered vehicles used to conduct underwater research. Tethered ROV systems can be classified in three basic categories:

### I. Observation class

Observation class ROVs are in other words a "flying eye". They are generally dedicated for light application equipped with propulsion systems and a set cameras and sensors. They target a place where they can provide a meaningful image or collect data. The most recent observation class ROVs allow these systems improvement. With the diversity of tools and numerous equipment, they are capable of mounting considerable loads of instrumentation, intervention equipment and aid in underwater navigation, which allows them to function as vehicles full-fledged submarines.

### II. Work-Class ROV

Work class ROVs are generally designed with large chassis (measured in several yards/meters) with a multitude of multifunction manipulators, hydraulic propulsion/actuation systems, and equipped with heavy tools dedicated to large caliber projects such as underwater construction where it is necessary to move heavy equipment underwater.

### III. Special Use ROV

Special purpose systems are underwater robots designed to higher specifications. specific. For example, we can cite a special purpose vehicle which is the ROV system, cable burial site designed to plow the seabed in order to bury cables from telecommunications.

### Water Sampling Systems:

Surface water represents the main resource withdrawn (73% on all uses excluding hydroelectricity), particularly due to the supply of canals and cooling of the power plants that mainly use them. For irrigation and industry, they constitute approximately 2/3 of the samples. Conversely, 2/3 of Drinking water samples concern groundwater.

It should be noted that the principle of water withdrawal has theoretical differences and techniques depending on the type of water to be sampled (estuary, coastal environment, offshore sea) and logistics (boat and sampling equipment).

The objective is to ensure that any contamination that could be induced by logistics is avoided so as not to modify the initial composition (including contamination of the water to be sampled. Then, the sample will be carried out outside the area potentially impacted by the boat or the equipment sampling so during sampling we will avoid contaminating the water by contact with the internal walls of the sampling system or with the atmosphere (contaminated by the presence of the ship).

Over the years, engineers have looked for many solutions to collect marine water samples, which include hand picking (directly into bottle), collection bottle, and pump sampling.

### Hand picking:

The sample is taken directly with the bottle intended for subsurface analysis with a little material in the bank of a river, a port or on the coast and it is always carried out at least a few tens of centimeters below the surface (30 cm minimum if possible). In fact, the arms of the sampler agent are protected by polyethylene gloves with cuffs, and the sample is taken by plunging the bottle below the surface, as far as possible from the nautical support or pontoon. When the collection bottle has been packaged filled with water acidulated, it is emptied (in a container provided for this purpose) just before sampling.

### Collection Bottle:

This technique is the only one usable for sampling at depths greater than range of action of the pumps (generally more than 200 m). There are several types of bottle sampling, including Go-Flo bottles (General Oceanics, USA). These are PVC tubes whose interior surface is coated with Teflon, and which open at both ends. So, the Go-Flo bottle is ideal for deep sampling. Its elastic closure is external. The entire interior is made of plastic and coated with Teflon. It is designed to be sent closed and open at a depth of around 10 m under the pressure of the water column, from which it is always filled. She can therefore sample at all depths without risking crushing under pressure. It closes at the desired depth via pressure controlled valve.

Additionally, there are small volume bottles of the Merkos type, produced entirely in Teflon. They are sent empty and closed, and only open at the upper end at the depth of sampling, by triggering a messenger. They are therefore interesting for shallow depths but cannot be used for deep sampling of the crushes under pressure.

The sample bottle and the messenger are kept in polyethylene bags until levy. So, the filling method is done in several stages.

1. Take out the bottle and the messenger from its bag to attach it to the cable.

2. Then move the cable away from the hull of the boat while holding the messenger, then thread the cable to the desired depth, and send the messenger.

3. Reassemble the bottle and now closed.

4. Unhook the bottle, collect the messenger and keep it in your bag until following sample.

### Pump sampling:

This type of sampling requires more equipment but allows the sampling of large volumes and above all better control of contamination. The system (pump and pipes) is entirely made of Teflon. An example is pneumatic Teflon piston pump shown in Fig. 6 actuated by gas pressure external to its body. The upstream end of the pump is diving below the surface of the water. The greatest attention must be paid downstream of the pump, to avoid excessive contamination of the sample, particularly the atmosphere contaminated from the ship. Large quantities of water can be collected in a relatively short time in short (around ten liters in a few minutes), depending on the flow rate of the pump and the loss of load in the pipes.

### SUMMARY

The present invention provides a subsurface water sample collection unit, comprises an electronically actuated valve controlled by an external input, a fill gauge; and a hermitically sealed sampling cup.

In one aspect of the invention, the actuated valve is a solenoid valve.

In another aspect of the invention, the at least one sample collection unit comprises at least one physical or chemical sensor. The at least one physical or chemical sensor, comprising a temperature, ammoniac levels, chlorophyll, CO₂, or O₂ sensor.

In a further aspect of the invention, the at least one sample collection unit comprises at least one biosensor. The at least one biosensor is capable of performing in situ analysis in the sampling cups for biodiversity applications or pathogens detection.

In one more aspect of the invention, the at least one sample collection unit comprises an environmental DNA (E-DNA) filter.

In one aspect of the invention, the fill gauge is an electric conductivity sensor.

In one particular embodiment of the invention, the subsurface water sample collection unit further comprises a body, wherein the body comprising an inlet having an opening to an exterior environment, and in fluid communication with a sample cup connector, wherein the sample cup forms a sealed connection to the sample cup connector when it is attached to the body, wherein the body further comprising a valve housing, wherein the electronically actuated valve is located in the valve housing, wherein the electronically actuated valve can be commanded to allow or occlude fluid passage between the inlet and the sample cup connector.

In the embodiment of the invention, the subsurface water sample collection unit may comprise a power supply interface for actuating the electronically actuated valve.

In the embodiment of the invention, the subsurface water sample collection unit may comprise an input/output interface for readout of the at least one physical or chemical sensor or the at least one biosensor.

The present invention also provides a subsurface water sampling system, comprises an onboard control unit, comprising, a power supply interface, an input/output (I/O) interface, an actuator driver in communication with the onboard control unit, at least one sample collection unit as previously described.

In one aspect of the invention, the subsurface water sampling system further comprises a feedback system, wherein the feedback system reports on the status of the at least one sample collection unit. The feedback system reports a sample level of the at least one sample collection unit.

In another aspect of the invention, the subsurface water sampling system further comprises a hazard avoidance system, wherein the hazard avoidance system monitors internal parameters including temperature, pressure, and potential water leakage.

The as previously disclosed may be adapted for use with an underwater remote operated vehicle.

The present invention further provides method of acquiring subsurface water sample, comprises submerging a subsurface water sampling system as previously disclosed, actuating the actuated valve to an open position when a predetermined condition is met, and closing the actuated valve to a closed position when the fill gauge indicates a desired sample level is reached.

In one aspect of the invention, the predetermined condition is at least one of depth or location.

In another aspect of the invention, the subsurface water sampling system is installed on a remote operated vehicle.

In a further aspect of the invention, the remote operated vehicle navigates to the predetermined condition is at least one of depth or location.

In one aspect of the invention, the method further comprises evacuating the sampling cup prior to submerging the subsurface water sampling system.

### BRIEF DESCRIPTION OF DRAWINGS

The foregoing summary, as well as the following detailed description of the preferred embodiments, will be better understood when read in conjunction with the appended drawings. It should be understood, however, that the invention is not limited to the precise arrangements and instrumentalities shown. In the drawings,
Figure 1 illustrates an exemplary embodiment of the subsurface water sampling system;

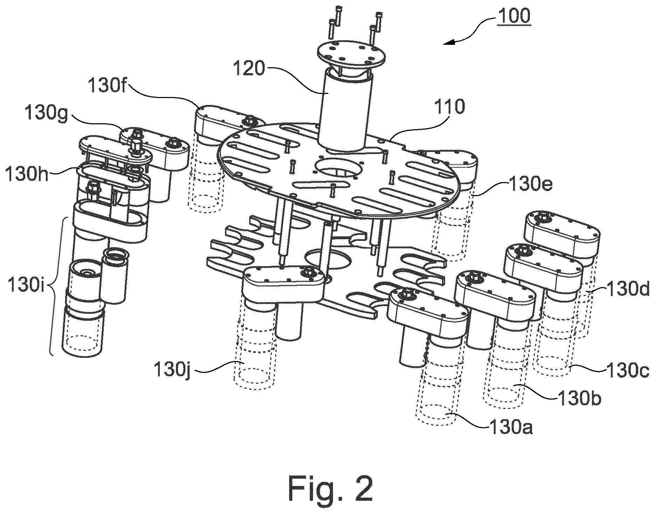

Figure 2 illustrates an exploded view of the exemplary embodiment of the subsurface water sampling system;
Figure 3A illustrates exemplary an exemplary embodiment of the subsurface water sampling unit;
Figure 3B illustrates an exploded view of the exemplary embodiment of the subsurface water sampling unit;
Figure 4 illustrates cross-sectional view of the exemplary embodiment of the subsurface water sampling unit; and
Figure 5 is overview of the subsurface water sampling system.

### DETAILED DESCRIPTION

Sampling marine waters has historically yielded results with limited precision due to constraints in time, sampling methods, and slow procedures. Traditional sampling techniques, such as using bottles, restrict the number of samples to 3 or 4 per operation, leading to compromised sample quality due to transportation delays and expiration deadlines. Particularly for samples from deep sites, the limited quantity available further diminishes the quality of scientific studies.

To address these challenges and enable efficient sampling with a considerable number of high-quality samples, the present invention provides a comprehensive solution:

Efficient Sampling Mechanism: The system incorporates sampling unit capable of automatically collecting samples, allowing for the collection of up to 10 samples in a single operation. This significantly increases the quantity of samples available for analysis, enhancing the robustness of scientific research.

Transportation Conditions: hermitically sealed sample cup designed to maintain sample freshness are employed to transport the collected samples. These bottles ensure that the samples remain in optimal conditions, including darkness and a controlled internal temperature of 5°C ± 3°C, throughout the journey to the laboratory.

Accessibility to Deep Sites: The system is engineered to navigate and operate in depths of up to 200 meters, enabling access to submerged sites previously inaccessible. This capability opens up opportunities for significant scientific discoveries in previously unexplored marine environments.

By addressing the limitations of traditional sampling methods and enhancing efficiency, the proposed system holds the potential to revolutionize marine research by providing researchers and oceanologists with a reliable tool to gather fresh and numerous samples, thereby contributing to more impactful scientific endeavors. In the subsequent sections of this report, the technical intricacies of the system will be elucidated, including its operational requirements and the underlying technology driving its design and functionality.

Introduction to Subsurface Water Sampling System Adapted for Use with Underwater Remote Operated Vehicle:

The subsurface water sampling system is a cutting-edge tool designed for collecting subsurface water and biological samples and monitoring environmental factors in marine environments using remotely operated vehicles (ROVs). This innovative system offers numerous benefits, including its compact design, ease of use, and advanced technology integration.

The present invention provides a modular, multi-capabilities and smart sampling solution. The system can be implemented and mounted on various robots which gives it an ultimate mobility capability so that the operators can sample and measure water from different locations at the same mission. In addition, the system is coupled with smart measurement and analysis equipment such as physical sensors (Oxygen, salinity, pH, temperature ...) and also custom made bio sensors that allows the detection of specific molecules in water.

### Design and Construction:

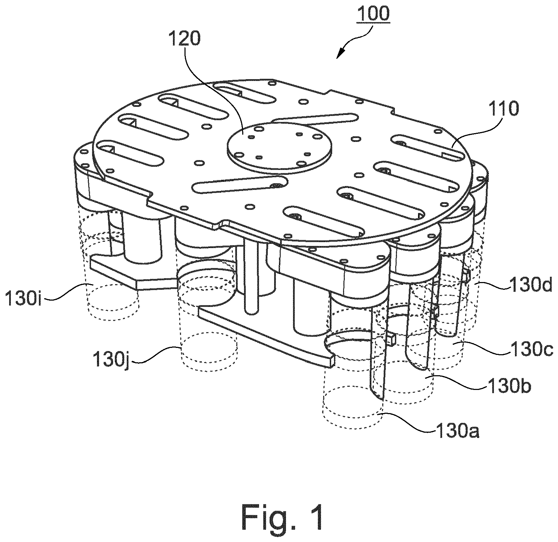

The subsurface water sampling system is specifically tailored for water quality monitoring applications and is configured to be easily integrated with existing ROV systems, for example, SeaBot ROV equipment. It features a user-friendly and compact design, allowing for quick deployment even in challenging underwater environments. The exemplary system shown in Fig. 1 comprises 10 sample collection units that efficiently draw seawater through a sample hose and into a two-hundred milliliter sample cup. Its lightweight construction enables the device to achieve neutral buoyancy in water, ensuring optimal performance and stability during underwater operations. The compact and lightweight design of the herein disclosed Underwater Sampling System makes it highly versatile, enabling easy deployment even in confined or challenging underwater environments. The exemplary system's dimensions are 400 mm x 300 mm x 200 mm, and it weighs 4.5 kg in air, ensuring neutral buoyancy in water for optimal performance and stability during operations. With its advanced technology integration, the system can perform in-situ analysis using temperature, ammoniac levels, chlorophyll, CO₂, and O₂ sensors, as well as biosensors for specific applications such as pathogen detection or biodiversity studies. Specific sensors can be employed to detect, for example, lead (Pb), cadmium (Cd), carbon monoxide (CO), nitrite, formaldehyde, acetone, methanol, alcohol, hexane, dimethoate pesticides, oxalate, helicobacter, and other biomarkers.

### Operating Process:

Each of the sample collection unit comprises a solenoid valve which is actuated to open or close an inlet to the surrounding seawater, allowing seawater to enter the sample cup. Once the valve is open, seawater flows into the sample cup, enabling the collection of a sample. When the bottle is filled with the seawater sample, the solenoid valve closes, preventing any leakage or contamination of the sample. This efficient and reliable operating process allows for precise and controlled collection of seawater samples, ensuring high-quality data for water quality monitoring and environmental research purposes.

### Power Supply and Communication:

The subsurface water sampling system received poer from the ROV. In the example shown in the Figures, the subsurface water sampling system requires a minimal 12V power supply on the ROV for operational efficiency. It also utilizes a straightforward two-wire TX, RX communication configuration, ensuring seamless integration with existing equipment and facilitating quick and efficient data collection. The system is configured to be hermitically sealed, allowing it to function effectively in various underwater environments.

### Sampling Capability:

The subsurface water sampling system can collect precise water samples, ensuring high-quality data for water quality monitoring and research purposes. The exemplary sample cup holds 200 mL, which are suitable for collecting biological samples during underwater operations. In the example shown, the subsurface water sampling system comprises 1o independent sampling units. Each of the sampling unit can be independently controlled to collect an unique sample at for example different location or depth. Once the valve is closed the sample cup is hermetically sealed, which ensures that the water sample is kept at the pressure of its sampling depth and minimizes sample contamination.

### In-situ Analysis:

The subsurface water sampling system incorporates multiple sensors, including temperature, ammoniac levels, chlorophyll, CO₂, and O₂ sensors, allowing for real-time measurement of useful oceanographic factors. This capability is invaluable for understanding and addressing water quality issues and monitoring changes in aquatic ecosystems.

### Advanced Technology Integration:

The system integrates AI-based software that enhances its capabilities by enabling the analysis and prediction of potential dangers and challenges in the study areas. This predictive power equips researchers with the tools needed to proactively manage water quality and make informed decisions. Furthermore, the system offers the seamless integration of biosensors into its sampling cups, facilitating specific biodiversity applications and pathogen detection in aquaculture.

### Applications and Benefits:

The subsurface water sampling system offers a range of benefits for underwater research, including its compact and portable design, enabling easy maneuverability and sampling from various locations. Its versatility allows for comprehensive insights into water quality across different regions. Real-time data transmission capabilities keep researchers connected to the data that matters most, facilitating prompt response to changes.

In the exemplary system shown in Fig. 1, the subsurface water sampling system 100 comprising a chassis 110 that provide structure support to the components of the system and also provide attachment points to the ROV.

A controller housing 120 is attached to the chassis 110. The controller housing 120 is hermitically sealed to protect the delicate electronic components housed within.

In the example shown, the subsurface water sampling system 100 includes 10 sampling units 130a, 130b, 130c, 130d, 130e, 130f, 130g, 130h, 130i, 130j. Each of the sampling unit comprises a sample cup, which is connected to an inlet. There is an electronically actuated valve between the sample cup and the inlet. When the valve is commanded to open, the sample cup is in fluid communication with the inlet. When the valve is commanded to close, the sample cup is hermetically sealed.

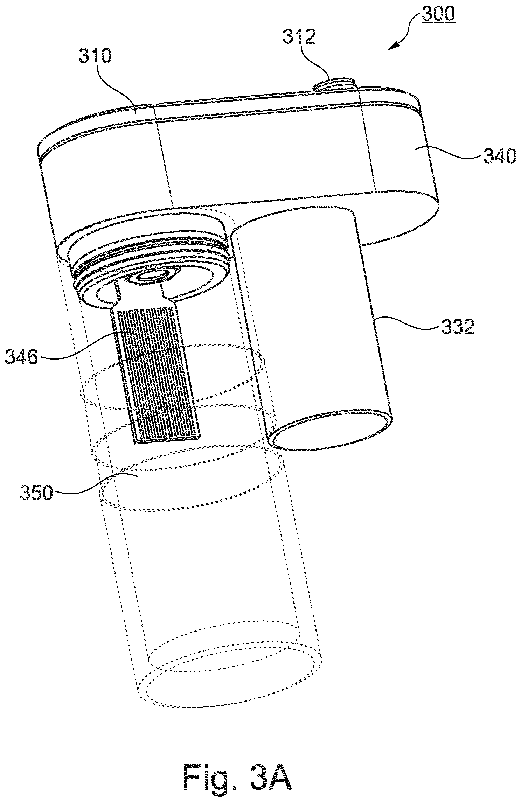

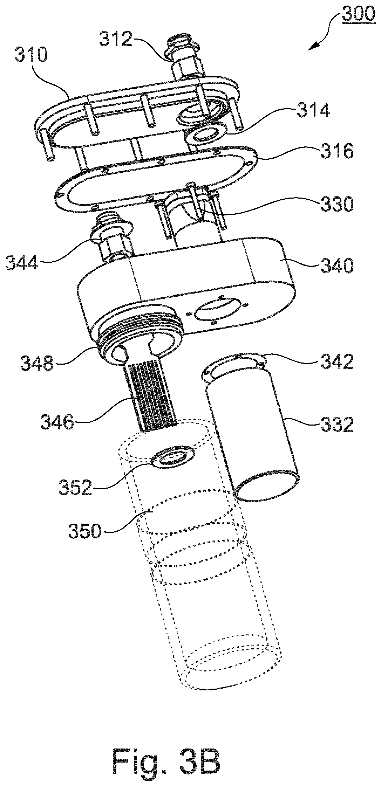

Figs. 3A and 3B show the detailed construction of a single exemplary sampling unit 300. The sampling unit 300 comprises a body 340, a top cover 310, a valve housing 332, and sampling cup 350. An inlet 312 is located on the top cover 310. O-ring 314 provides a tight seal against the top cover 310. The top cover 310 is attached to the body 340 via a number of bolts. A top cover seal 316 is located between the top cover 310 and the body 340. An O-ring 342 is located between the valve housing 332 and the body 340. Sample cup connector 344 is located on the lower part of the body 340, which provide a fluid passage to the sampling cup 350. In the embodiment shown, the sampling cup 350 is affixed to the body 340 via a threaded connection 348. The sampling cup 350 having an opening 352 that is sealed against the sample cup connector 344 when properly affixed to the body 340.

An electronically actuated valve 330, such as a solenoid valve, is located in the valve housing 342. The electronically actuated valve 334 regulates a fluid passage between the inlet 312 and the sample cup connector 344. The electronically actuated valve 330 is a useful component of the subsurface water sample collection unit, as it allows for precise control over the flow of water into the sampling cup 350. This valve is controlled by an external input, which can be remotely adjusted to regulate the amount and rate of water entering the cup. The electronically actuated valve 330 is configured to be hermitically sealed, ensuring the sampling unit can operate at depth. This feature makes it ideal for use in a wide range of environments, including aquatic habitats, agricultural lands, and even underground mines.

Other electrically actuated valves such as electrically operated ball valves or Piezoelectric valves can be used with the present invention. Electrically operated ball valves utilize an electric motor or actuator to rotate a ball with a hole through it to control the flow of fluid. When the motor receives an electrical signal, it rotates the ball to either allow or block the flow of fluid. Piezoelectric valves use the piezoelectric effect, where applying an electric field to certain materials causes them to deform, to control fluid flow. When an electric signal is applied to the piezoelectric material, it deforms, either opening or closing the valve.

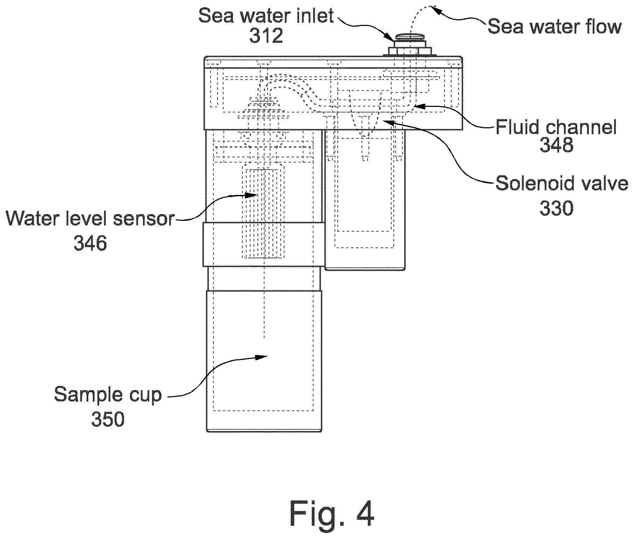

Fig. 4 show a cross-sectional view of the exemplary sampling unit 300. Sea water flow is indicated by the dashed line arrow. Namely, when the electronically actuated the valve 330 is open, sea water flow from the inlet 312 through a fluid channel 348 in the body 340, and continue to the sample cup connector 344, and into the sampling cup 350.

The ability to control the valve externally is particularly useful when multiple sample collection units are being used simultaneously. Operators can command the operation of each of the valve independently or via program stored on the payload control unit to ensure that each unit is filled at the appropriate location and depth, and with an appropriate amount of water sample for the specific application at hand.

The hermitically sealed sampling cup350 provides a valuable container against environmental factors that could compromise the quality of the collected samples. The sealed sampling cup allows for the preservation of samples at deep sea conditions. The hermitically sealed sampling cup ensures that the samples remain free from external contamination and degradation, which is essential for accurate water quality monitoring.

The sampling unit 300 may also incorporates a fill gauge 346, which senses the sample level within the sampling cup 350. In the embodiment shown, the fill gauge 346 is an electricity conductivity sensor, which becomes conductive to electricity when sample level, e.g., when sea water making contact with the fill gauge. The electronically actuated valve 330 can then be actuate to close, sealing the sampling cup 350.

Other sensor mechanism, e.g., a float switch, capacitive level sensor or ultrasonic level sensor, that can detect sample level in the sampling cup can also be used. A float switch consists of a buoyant float connected to a lever arm. As the fluid level rises or falls, the float moves accordingly, causing the lever arm to actuate a switch. Capacitive level sensors utilize changes in capacitance to detect the presence or absence of a liquid. They typically consist of two electrodes, one acting as a probe and the other as a reference, with the liquid acting as a dielectric. Ultrasonic level sensors use ultrasonic waves to measure the distance between the sensor and the liquid surface. By calculating the time taken for the ultrasonic pulse to reflect off the liquid surface and return to the sensor, the sensor can determine the fluid level.

The hermitically sealed sampling cup design can incorporate a variety of physical or chemical sensors that can monitor temperature, ammoniac levels, chlorophyll, CO₂, O₂, or other relevant parameters in real-time. The hermitically sealed sampling cup design can also incorporate a variety of biosensors capable of performing in situ analysis for biodiversity applications or pathogens detection. These sensors detect specific biomarkers or genetic material present in the water sample, providing researchers with valuable data on the subsea ecosystem. Specific sensors can be employed to detect, for example, lead (Pb), cadmium (Cd), carbon monoxide (CO), nitrite, formaldehyde, acetone, methanol, alcohol, hexane, dimethoate pesticides, oxalate, helicobacter, and other biomarkers.

In addition to biosensors, environmental DNA (E-DNA) filters are also included in the hermitically sealed sampling cups. These filters preserve any DNA present in the water sample for later analysis, allowing researchers to gain a deeper understanding of the genetic makeup of the subsea ecosystem. The E-DNA filter works by using a combination of enzymes, antibodies, and other molecules to detect target substances, providing more data and information about the environment being studied. Environmental DNA (E-DNA) filters can be incorporated into the sampling cups to collect and preserve any DNA present in the water sample for later analysis.

The cup's lightweight construction enables deployment even in confined or challenging underwater environments, while its compact design allows for easy integration with existing equipment. The hermitically sealed sampling cup facilitates the subsurface water sample system by providing researchers with high-quality samples that can be analyzed to gain insights into aquatic ecosystems and water quality issues. By using advanced sensors and innovative technologies, this system enables proactive water quality management and promotes environmental sustainability.

The sample collection unit may also incorporate a power interface, which provides electronic power to the electrically actuated valve, and input/out (I/O) interface for the fill gauge, and onboard sensors.

The sample collection unit incorporates advanced technology integration, including AI-based software that enhances its capabilities by enabling the analysis and prediction of potential dangers and challenges in the study areas. This predictive power equips researchers with the tools needed to proactively manage water quality and make informed decisions. Furthermore, the system offers seamless integration of biosensors into its sampling cups, facilitating specific biodiversity applications and pathogen detection in aquaculture.

The power supply interface and I/O interface are functional components of the onboard control unit, which communicates with at least one sample collection unit. These interfaces ensure seamless integration with existing equipment and enable quick and efficient data collection. The hazard avoidance system, which monitors internal parameters such as temperature, pressure, and potential water leakage, is also functional for ensuring the safety and reliability of the system during underwater operations.

The present disclosure relates to a subsurface water sample collection unit that includes an electronically actuated valve controlled by an external input and a hermitically sealed sampling cup. This innovative design allows for precise and controlled collection of subsurface water samples, ensuring their integrity and providing high-quality data for water quality monitoring and environmental research purposes. The system is equipped with at least one physical or chemical sensor that can monitor temperature, ammoniac levels, chlorophyll, CO₂, O₂, or other relevant parameters in real-time. Additionally, the sampling cups incorporate biosensors capable of performing in situ analysis for biodiversity applications or pathogens detection. These biosensors are configured to detect specific biomarkers or genetic material present in the water sample, providing researchers with valuable insights into the subsea ecosystem on a specific area.

The use of biosensors in the sampling cups offers several advantages over traditional filtration methods. Environmental DNA (E-DNA) filters can be integrated into the sampling cups to collect and preserve any DNA present in the water sample for later analysis. This technology allows for the collection of genetic material from a larger volume of water, providing more data and information about the subsea ecosystem on a specific area. Furthermore, the biosensors can be customized for specific applications, enabling researchers to tailor the sensors to their needs.

The sample collection unit of the present disclosure may also include an Environmental DNA (E-DNA) filter, which is a valuable component for collecting and preserving genetic material from aquatic environments. E-DNA filters are configured to capture and retain genetic material present in water samples, allowing researchers to analyze the composition of microbial communities in various ecosystems. This innovative technology offers functional advantages over traditional filtration methods, as it provides a more comprehensive understanding of subsurface water quality by collecting genetic material from a larger volume of water.

The E-DNA filter is incorporated into the sampling cup and functions by using a combination of membranes with different pore sizes to retain specific components while allowing others to pass through. The retained genetic material can then be extracted and analyzed using molecular biology techniques, such as polymerase chain reaction (PCR) or sequencing, to identify the presence of specific biomarkers or genetic material. This technology is particularly useful for detecting rare or cryptic species, monitoring biodiversity, and assessing the impact of environmental stressors on aquatic ecosystems.

The inclusion of E-DNA filters in the sample collection units enhances the overall capabilities of the subsurface water sampling system by providing researchers with a holistic approach to water quality management. By analyzing the genetic material present in water samples, scientists can gain insights into the structure and function of microbial communities, which is useful for understanding and protecting aquatic ecosystems. Furthermore, E-DNA filters preserve the integrity of the DNA samples by preventing degradation and contamination, ensuring high-quality data for research purposes.

The versatility and adaptability of the subsurface water sampling system, including its ability to integrate E-DNA filters into the sample collection units, make it an invaluable tool for researchers studying aquatic ecosystems. By providing real-time data on genetic material present in water samples, this technology allows scientists to proactively manage water quality and develop informed mitigation strategies. The inclusion of E-DNA filters demonstrates the commitment to innovation and environmental sustainability that drives the development of cutting-edge water quality monitoring tools.

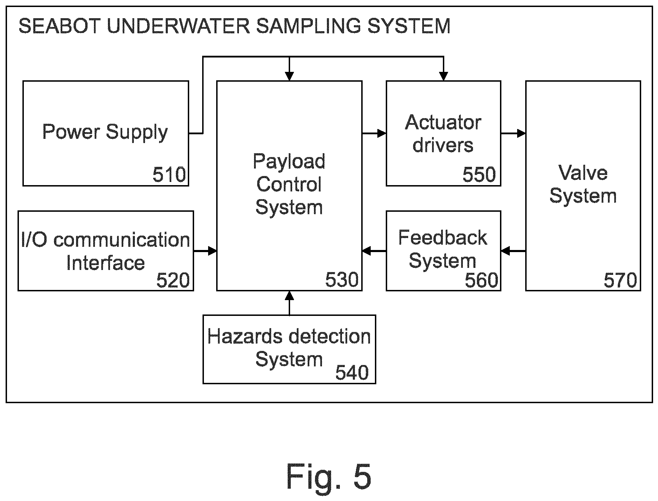

Fig. 5 provides an overview of the major functional components of the subsurface sampling system. The payload control system 530 serves as the brain of the entire operation. It is responsible for controlling and coordinating all aspects of the system's functioning, including power supply 510, I/O communication 520, hazard detection system 540, actuator driver 550, feedback system 560, and valve system 570.

The payload control system 530 is equipped with a power supply 510 interface that receives a minimal 12V power supply required for optimal performance. This interface ensures that the system operates efficiently, maximizing battery autonomy and minimizing standby power consumption. The input/output (I/O) interface 520 of the payload control system 530 facilitates real-time feedback and control between the payload and the main ROV controller. By achieving baud rates of up to 100Mbits, it enables swift and responsive interactions between components, allowing for precise and adaptive control.

The power supply interface and I/O interface facilitate communication between the control unit and the sample collection units. These interfaces ensure seamless integration with existing equipment and enable quick and efficient data collection.

The payload control system 530 serves as the primary controller for the subsurface water sampling system Built on a low-power MCU architecture, this innovative approach ensures precise and adaptive control over the ten sampling units based on feedback from diverse sensors. This advanced technology integration enables real-time monitoring of functional internal parameters such as temperature, pressure, and potential water leakage, enhancing overall safety and situational awareness.

The actuator drivers 550 are configured to drive the electronically actuated valves of the ten sampling units according to payload control system instructions. They provide high voltage and currents required by the actuators, optimizing their performance in an efficient and reliable manner. The feedback system 560 incorporates a sensor mechanism that determines sample fill gauges. This innovative approach provides real-time reporting on the status of all fill gauges of the ten sampling unit, ensuring accurate and timely feedback on sample levels.

The hazard avoidance system 570 is a ensures the safety and reliability of the system during operation. It monitors various internal parameters, including temperature, pressure, and potential water leakage, to detect any abnormalities or hazards that could compromise the performance or integrity of the system. This real-time monitoring helps prevent accidents and minimize the risk of equipment damage or data loss.

The method of acquiring subsurface water samples with the subsurface sampling system involves several steps that ensure efficient and accurate sample collection or environment monitoring. Firstly, a predetermined condition such as depth or location is programed using the system's onboard control unit. The system is also equipped with power supply interface, I/O interface, and actuator driver. Once the desired condition is met, the electronically actuated valve is activated to open position, allowing seawater to flow into the sampling cup. The valve remains in this position until a predetermined sample level is reached, at which point it automatically closes to prevent contamination or leakage of the collected sample.

It is preferable to evacuate the sample cup prior to submerge the subsurface water sampling system. The electronically actuated valve can be commanded to open, and a vacuum pump can be connected to the inlet and the sample cup. The electronically actuated valve can then to closed and vacuum pump disconnected when the desired internal pressure is reached.

The remote operated vehicle (ROV) equipped with the subsurface water sampling system is then navigated to the desired sampling area. The predetermined condition can then collect water samples or use its advanced sensors for real-time data analysis. The ROV's hazard avoidance system, which monitors internal parameters such as temperature, pressure, and potential water leakage, ensures the safety of the system during operation. Once the ROV reaches the desired location or depth, the solenoid valve opens, allowing seawater to enter the sample cup due to the surrounding pressure. The sample is collected in a sample cup, which can be used for various applications such as water quality monitoring or environmental research.

All documents mentioned in this specification are incorporated herein by reference in their entirety for all purposes.

"and/or" where used herein is to be taken as specific disclosure of each of the two specified features or components with or without the other. For example, "A and/or B" is to be taken as specific disclosure of each of (i) A, (ii) B and (iii) A and B, just as if each is set out individually herein.

## Claims

1. A subsurface water sample collection unit, comprising:
an electronically actuated valve controlled by an external input;
a fill gauge; and
a hermitically sealed sampling cup.

2. The subsurface water sample collection unit of claim 1, wherein the actuated valve is a solenoid valve.

3. The subsurface water sample collection unit of claims 1-2, wherein the at least one sample collection unit comprising at least one physical or chemical sensor.

4. The subsurface water sample collection unit of claim 3, wherein the at least one physical or chemical sensor, comprising a temperature, ammoniac levels, chlorophyll, CO₂, or O₂ sensor.

5. The subsurface water sample collection unit of claims 1-4, wherein the at least one sample collection unit comprising at least one biosensor and preferably wherein the at least one biosensor is capable of performing in situ analysis in the sampling cups for biodiversity applications or pathogens detection.

6. The subsurface water sample collection unit of claims 1-5, wherein the at least one sample collection unit comprising an environmental DNA (E-DNA) filter.

7. The subsurface water sample collection unit of claims 1-6, wherein the fill gauge is an electric conductivity sensor.

8. The subsurface water sample collection unit of claims 1-7, wherein the subsurface water sample collection unit further comprising a body,
wherein the body comprising an inlet having an opening to an exterior environment, and in fluid communication with a sample cup connector, wherein the sample cup forms a sealed connection to the sample cup connector when it is attached to the body,
wherein the body further comprising a valve housing,
wherein the electronically actuated valve is located in the valve housing,
wherein the electronically actuated valve can be commanded to allow or occlude fluid passage between the inlet and the sample cup connector.

9. The subsurface water sample collection unit of claims 1-8, wherein the subsurface water sample collection unit comprising a power supply interface for actuating the electronically actuated valve.

10. The subsurface water sample collection unit of claims 1-9, wherein the subsurface water sample collection unit comprising an input/output interface for readout of the at least one physical or chemical sensor or the at least one biosensor.

11. A subsurface water sampling system, comprising:
an onboard control unit, comprising:
a power supply interface;
an input/output (I/O) interface;
an actuator driver in communication with the onboard control unit;
at least one sample collection unit according claims 1-10.

12. The subsurface water sampling system of claim 11, further comprising a feedback system, wherein the feedback system reports on the status of the at least one sample collection unit.

13. The subsurface water sampling system of claims 11-12, wherein the feedback system reports a sample level of the at least one sample collection unit.

14. The subsurface water sampling system of claim 11-13, further comprising a hazard avoidance system, wherein the hazard avoidance system monitors internal parameters including temperature, pressure, and potential water leakage.

15. The subsurface water sampling system of claims 11-14, where in the water sampling system is adapted for use with an underwater remote operated vehicle.

16. A method of acquiring subsurface water sample, comprising:
submerging a subsurface water sampling system according claims 11-15:
actuating the actuated valve to an open position when a predetermined condition is met; and
closing the actuated valve to a closed position when the fill gauge indicates a desired sample level is reached.

17. The method of acquiring subsurface water sample of claim 16, wherein the predetermined condition is at least one of depth or location.

18. The method of acquiring subsurface water sample of claims 16-17, wherein the subsurface water sampling system is installed on a remote operated vehicle and preferably, wherein the remote operated vehicle navigates to the predetermined condition is at least one of depth or location.
